**Europäisches Patentamt**

**European Patent Office**

**Office européen des brevets**

(19)

(11)  **EP 1 580 529 A1**

(12)  **EUROPEAN PATENT APPLICATION**

(43) Date of publication:
     **28.09.2005   Bulletin 2005/39**

(51) Int Cl.⁷: **G01C 21/34, B60Q 1/34**

(21) Application number: **04006878.5**

(22) Date of filing: **22.03.2004**

| | |
|---|---|
| (84) Designated Contracting States:<br>**AT BE BG CH CY CZ DE DK EE ES FI FR GB GR**<br>**HU IE IT LI LU MC NL PL PT RO SE SI SK TR**<br>Designated Extension States:<br>**AL LT LV MK** | (72) Inventors:<br>• **Hovestadt, Guido**<br>  **58739 Wickede-Ruhr (DE)**<br>• **Wolf, Stefan**<br>  **71701 Schwieberdingen (DE)** |
| (71) Applicant: **Harman/Becker Automotive Systems**<br>**GmbH**<br>**76307 Karlsbad (DE)** | (74) Representative: **Bertsch, Florian Oliver et al**<br>**Kraus & Weisert**<br>**Patent- und Rechtsanwälte**<br>**Thomas-Wimmer-Ring 15**<br>**80539 München (DE)** |

(54)    **System for controlling the direction indicator of a vehicle and method therefor**

(57)    The present invention relates to a system for controlling the direction indicator of a vehicle, comprising: means for detecting (101) at least one signal of at least one parameter relating to an operating state of the vehicle, and means (102) for activating the direction indicator depending on the detected signal of the parameter relating to the operating state of the vehicle.

Fig. 2

## Description

The invention relates to a system for controlling the direction indicator of a vehicle and to a method for controlling said direction indicator.

Related Art

According to recent statistics it has become a bad habit of people driving in vehicles not to use the direction indicator when they either turn left or right or when they change lanes on a road having several lanes for each driving direction. The omission of the activation of the direction indicator can cause many dangerous situations, since a driver cannot anticipate the behavior of the other drivers.

In the automotive field systems for controlling the activation of the direction indicator are known, which function with the help of cameras taking pictures of the environment in front of the vehicle. These pictures help to identify objects such as vehicles in front of the vehicle comprising the camera, so that these systems can activate the direction indicator, when any obstacle is identified in the picture. Furthermore, distance sensors are used relying on radar or ultrasound, which help to measure the distance to an upcoming obstacle in front of the vehicle. These camera-based systems, however, need highly sophisticated system for controlling the direction indicator. The algorithms to identify objects which induce the activation of the direction indicator are complicated. Furthermore, the proper function of this system cannot be guaranteed.

Additionally, navigation systems have become known in the art as computer-based systems which are mounted in a vehicle for calculating a driving route to a final destination input by the driver. These navigation systems rely on the position information obtained for the vehicle, and on map data comprising the data necessary for calculating a route from the present position to a predetermined destination. These navigation systems often also rely on signals originating from a motion sensor such as a gyroscope which indicates changes of the direction of the vehicle at a high accuracy.

Thus, there is a need for a system for controlling the direction indicator, which is easier to implement and for which additional devices controlling the environment of the vehicle are not necessary.

Summary of the invention

This need is met by a system for controlling the direction indicator of a vehicle and by a method for controlling the direction indicator as mentioned in the independent claims. The dependent claims are directed to preferred embodiments and further developments of the invention.

According to a first aspect of the invention, the system for controlling the direction indicator of a vehicle comprises means for detecting at least one signal of at least one parameter relating to an operating state of the vehicle, and means for activating the direction indicator which activate the direction indicator depending on the detected signal of the parameter relating to the operating state of the vehicle. According to an important aspect of the invention, the system for controlling the direction indicator relies basically on a signal relating to an operating state of the vehicle itself. In the present system there is no need for recording the environment of the vehicle in order to detect an upcoming bend or in order to detect any obstacle, e.g., vehicles driving at lower speed. Nevertheless, it is also possible to combine the signals of the operating state of the vehicle with signals from the "outside" of the vehicle. Thus, the system according to the invention may also comprise a camera for taking pictures of the environment of the vehicle. In nowadays vehicles many signals relating to different operating states of the vehicle are present in the vehicle, e. g., on bus systems. These signals of parameters are used for activating the direction indicator. The implementation of the system according to the invention is therefore easy and possible at low costs, since highly sophisticated picture systems for recording the environment of the vehicle are not absolutely necessary.

According to a further embodiment of the invention the system comprises a navigation system for detecting the actual position of the vehicle. The navigation system may also comprise road map data containing all the necessary information for calculating a route to a predetermined destination input by the driver of the vehicle. These navigation systems can be used to provide some of the signals which can be used for the activation of the direction indicator.

According to another embodiment of the invention means for detecting the type of road on which the vehicle is moving are provided, which compare the vehicle position to the road map data. The road map data which are used in navigation systems comprise all the information necessary for determining on what kind of road the vehicle is moving. The road map data comprise information whether the present road is a highway, a country road, a road within a built-up area, etc. As will be explained later, the type of road information can be used in order to determine whether the activation of the direction indicator should be used or not.

Furthermore, the system of the invention may comprise means for detecting changes in the direction of motion of the vehicle. In nowadays navigation systems the detection of changes in the direction of motion helps to determine the actual position of the vehicle in more detail, when the road map data and the actual vehicle position are compared to each other. One possible way for determining changes in the direction of motion is a gyroscope. With the help of a gyroscope the angular acceleration of a moving body can be detected with a high accuracy. The gyroscopes usually used in vehicles comprise piezoelectric elements and output a voltage signal indicating the changes of direction. The sign of the voltage signal indicates the direction of motion.

According to a further embodiment of the invention the speed signal of the vehicle detected by a speedometer can be used. The vehicle speed may be used in the following situation.

The driver of the vehicle may wish to enable or disable the activation of the direction indicator in dependence on different factors relating to the operating state of the vehicle. To this end a control unit for enabling or disabling said means for activating the direction indicator may be provided in the system of the invention. The control unit for enabling or disabling the activation of the direction indicator may enable or disable the activation depending on the type of road detected by said means for detecting the type of road (navigation device) and/or depending on the vehicle speed signal detected by the speedometer. One possible application of the present invention may be the enabling of the automatic activation of the direction indicator on highways at higher velocities. In the present context the word highway is used for any kind of road comprising several lanes for each driving direction.

It has been observed that especially on highways drivers do not activate the direction indicator, when they change from one line to the other, when overtaking another vehicle. However, many dangerous situations ensue therefrom. Accordingly, one possible application of the invention is enabling the activation of the direction indicator on highways when a certain vehicle speed is reached. The enabling may result from the following facts: First of all, the actual position of the vehicle is determined and compared to the road map data. By using the present position and the road map data the type of road on which the vehicle is moving can be determined. When it is determined that the vehicle is moving on a highway at a speed greater than a threshold speed, the system for activating the direction indicator may be enabled or disabled. This embodiment helps to assist an activation of the direction indicator, especially in situations where the driver considers it not necessary to activate the direction indicator. Especially on long journeys on a highway the system of the invention may help to improve the activation of the direction indicator and therefore helps to improve the security of all the road users.

According to another embodiment of the invention the activation of the direction indicator can be improved by the following embodiment. In addition to the determination of the actual position and the type of road used by the vehicle, the route to a predetermined destination is determined. This route is normally used for guiding the user of the vehicle to the predetermined destination. By comparing the determined route of the vehicle to the determined position and to the road map data containing the route, the course of the road in the direction of motion of the vehicle can be determined. By using this course of the road changes in the direction of motion of the vehicle can be predicted. This predicted direction changes can then be compared to the signal originating from the means for detecting changes in the direction of motion (e.g. the gyroscope). If the predicted direction of motion differs from the detected direction of motion by a certain amount, the direction indicator may be activated.

According to another embodiment of the invention the system may further comprise a memory for storing signal characteristics of said at least one parameter relating to the operating state of the vehicle. The stored signal characteristics can then be used for the decision whether the direction indicator should be activated or not. Therefore, the system may comprise a comparison unit for comparing the detected signal of said at least one parameter relating to the operating state to said stored signal characteristics. The comparison unit detects whether the detected signal is in accordance with the stored signal characteristics. The predetermined signal characteristics may comprise the chronology of the signals in situations where the activation of the direction indicator should take place. These signal characteristics of said at least one parameter relating to the operating state of the vehicle normally depend on the used type of vehicle. According to a further aspect of the invention these signal characteristics may be generated for different types of vehicles and then stored in a memory of the vehicle. In order to receive or transmit signal characteristics from the vehicle or to the vehicle the system may further comprise a transmitting/receiving unit for transmitting and/or receiving these characteristics of said parameter. The characteristics may be transmitted to the vehicle by using a web server of the internet or by using cell phone networks. Before the activation of the direction indicator the following steps may be carried out: First of all, the signal of at least one parameter relating to an operating state of the vehicle is detected and the detected signal of said parameter is compared to the predetermined signal characteristics stored in the vehicle. In a second step it is detected whether the detected signal is in correspondence with any of the predetermined signal characteristics. In the affirmative case, the direction indicator is activated when the detected signal is in correspondence with any of the predetermined signal characteristics. Before the detected signal is compared to the signal characteristics, the influence on the signal due to the course of the road can be considered. The part of the signal induced by the course of the road and not by a situation where the activation of the direction indicator is needed can be taken into account. The signal free of said signal components due to the course of the road can then be compared to the predetermined signal characteristics.

In the following preferred embodiments are described for activating the direction indicator. When the actual position of the vehicle is determined and the course of the road in the direction of motion is determined by comparing the determined position of the vehicle to the route and to the road map data, the changes in the direction of motion can be detected by using the voltage signal emitted from a gyroscope of a motion detector sensor. The detected voltage signal $v_{det}(t)$ of the gyroscope is compared to a predicted voltage signal $v_{pre}(t)$ which is predicted by using the determined course of the vehicle by using the actual position and the route and the road map data. When the detected voltage signal $V_{det}(t)$ is compared to the predicted voltage signal $v_{pre}(t)$ and these two voltages differ from each other by a certain threshold value $v_{th}$, the direction indicator may be activated.

Before the direction indicator is activated automatically when the predicted signal differs from the detected signal, the activation of the direction indicator may be enabled or disabled. The activation of the direction indicator may be useful in certain applications and may not be useful in other applications. The activation of the direction indicator may be enabled or disabled in dependence on the vehicle speed, the type of road the vehicle is using, and/or on the course of the road which was predicted by comparing the actual position on the route to a predetermined destination. As described above, one possible application of the invention may be the use of the activation of the direction indicator on highways at high vehicle speeds. Another application of the invention may be the fact that the vehicle is moving in a roundabout and not on highway. In these roundabouts the vehicle normally follows a path in the form of a circle. When the the driver of the vehicle intends to exit the roundabout, the direction of motion will change abruptly. This change in the direction of motion may be used in order to determine that the driver wants to exit the roundabout, so that the direction indicator can be activated automatically. The driver does not need to activate the direction indicator manually.

According to a further embodiment of the invention the method for the activation of the direction indicator may comprise the step of activating a learning mode in which, during driving, at least one parameter relating to an operating state of the vehicle is recorded and taken as predetermined signal characteristic. The driver of the vehicle may want to 'teach' the system of the invention when the direction indicator should be activated. One possible application is the activation of the direction indicator during a lane change on a highway. The driver of the vehicle may activate the learning mode and change the lane on a straight part of the highway. The gyroscope will record the change of voltage induced by this lane change. The system for activating the direction indicator may then use this time course of the voltage signal as a predetermined signal characteristic. In this context, the course of the highway in the direction of motion can also be considered before activating the direction indicator, so that the driver is not limited to straight parts of the road.

According to a further embodiment the direction indicator may also be activated via voice command generated and output from a speech control system of the vehicle. This feature can be useful when the navigation system was not originally installed in the vehicle by the manufacturer of the vehicle, but was bought later by the user of the vehicle. In this case there may be no connection between the navigation system and the activation of the direction indicator. Nowadays navigation systems often comprise voice control features. The navigation system may generate a text-to-speech (TTS) message which may be output via the audio system of the vehicle. If the direction indicator can be controlled by using voice commands, the direction indicator can be activated by the voice command generated by the navigation system.

The invention further relates to a voice control system in which a voice message generated by a text-to-speech system is output via a loudspeaker and is used for controlling any unit of the vehicle, be it direction indicator, air conditioning, the horn, the audio system, clutch or acceleration pedal.

The voice control system receives the voice message generated by the text-to-speech system, processes it and carries out the order comprised in the message.

According to a further embodiment of the invention, the lane in which the vehicle is moving can be detected by comparing the actual position of the vehicle to the road map data. Nowadays navigation systems can determine the actual position of the vehicle in such a way that the distinction between different lanes has become possible. When the road map data indicate that several lanes for one driving direction are provided and when the navigation system detects the lane used by the vehicle, the direction indicator can be activated depending on the detected signal of the operating state in combination with the lane information provided by the navigation device.

The activation of the direction indicator may also be used by taking into account the probabilities of different roads, i.e. the probabilities that the driver will use a certain road. For this purpose the routes to the predetermined destinations may be stored in the navigation device, the actual route calculated to a predetermined destination may be compared to the stored routes, and probabilities may be calculated whether the present route corresponds to one of the stored routes. If it is known that the actual route will probably correspond to one of the routes already used earlier, the activation of the direction indicator can be achieved by taking into consideration the calculated probabilities.

A further parameter which can help in order to decide whether the direction indicator should be activated are the signals originating from the brake, the clutch, or the accelerator pedal of the vehicle. The signals originating from these sensors help to predict a future behavior of the vehicle. When the vehicle is accelerating or braking, the amount of positive or negative acceleration can be used as a basis for the activation of the direction indicator.

Another parameter which helps to detect changes in the direction of motion of the vehicle are rotation signals from the different wheels of the vehicle. The rotation signals of the different wheels of the vehicle are normally present in vehicles and help to determine changes in the direction of motion of the vehicle. This can be helpful when the vehicle does not comprise a gyroscope or similar means for detecting changes of motion. By calculating the difference between the different rotation speeds of the wheels of the vehicle changes of motion can be detected and can be used as a basis for activating the direction indicator.

According to a further aspect of the invention the future activation of the direction indicator will be indicated to the driver, so that the driver has the possibility to overrule the activation by indicating that the direction indicator should not be activated. The driver can therefore correct the activation of the direction indicator.

Further features and advantages of the present invention become apparent from the following description of preferred embodiments with reference to the accompanying drawings, in which

> Fig. 1 shows a system for controlling the direction indicator of a vehicle,
> Fig. 2 shows a flowchart for activating the direction indicator,
> Fig. 3 shows a flowchart with the different steps for activating the direction indicator in more detail,
> Fig. 4 shows an example of activating the direction indicator within a built-up area,
> Fig. 5 shows a learning mode for activating the direction indicator, and
> Fig. 6 shows a flowchart with the different steps for activating the direction indicator by using voice control.

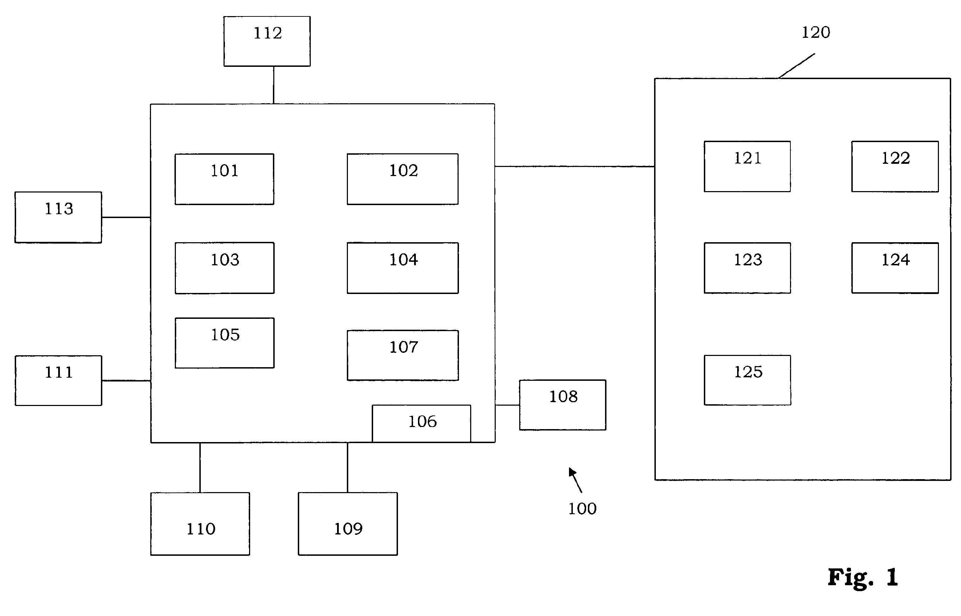

In Fig. 1 a system 100 for controlling the direction indicator is shown. The system comprises a detection unit 101 for detecting at least one signal of at least one parameter relating to an operating state of the vehicle. When the detected signal meets predetermined requirements, as will be described later, an activation unit 102 will activate the direction indicator. Before the direction indicator will be activated by the activation unit, a comparison unit 103 may compare the signal detected by the detection unit 101 to predetermined requirements. These predetermined requirements are stored in a memory 104 in the form of predetermined signal characteristics. Furthermore, a control unit 105 is provided which enables or disables the activation unit 102. The system further comprises a transmitting/receiving unit 106 for transmitting data from the vehicle to other locations or to receive data from outside of the vehicle. These data may comprise predetermined signal characteristics to be stored in the memory 104, which are used to compare the detected signal of the parameter relating to the operating state of the vehicle to the stored characteristics.

The system 100 may further comprise a navigation unit 120. Such a navigation unit may correspond to navigation units that are nowadays sold in vehicles. The navigation unit 120 comprises a position detecting unit 121, a route determination unit 122. The route determination unit is normally used to calculate a route to a predetermined destination which can be determined by the driver of the vehicle. For the determination of the route the navigation unit 120 comprises road map data 123 comprising all the necessary geographical and road-related data which are needed for a proper functioning of the navigation unit. When the position is detected by the position detecting unit 121 and the route is calculated by the road determination unit 122, the course of the road and the direction of motion of the vehicle can be determined by a course determination unit 124 by comparing the position of the vehicle to the determined route and to the road map data 123. Furthermore, the type of road on which the vehicle is moving can be determined by a type of road determination unit 125. This is possible, since the road map data 123 comprise the information about the type of road.

The system 100 further comprises different sensors providing different signals of parameters relating to the operating state of the vehicle. The system comprises a gyroscope 108 for detecting changes in the direction of motion of the vehicle. Gyroscopes are normally used in navigation systems in order to improve the detection of the position of the vehicle and correlate the position to the road map data. The gyroscopes normally provided in vehicles comprise piezoelectric sensors emitting a voltage signal, the voltage signal being an indication for the changes in the direction of motion of the vehicle. Apart from the signals of the gyroscope 108, the signals originating from a gear monitoring unit 109, a speedometer 110, a brake or clutch monitoring unit 111, or a camera or radar (not shown) can be used.

Furthermore, a display unit 112 is provided which can be used for informing the driver of the vehicle that the activation unit 102 will activate the direction indicator of the vehicle. As will be discussed later, the display unit for the information of the driver can be used for informing the driver before the direction indicator is activated, so that the driver can react to the displayed information and can, if needed, overrule the activation unit 102 by indicating that the direction indicator should not be activated.

A voice control unit 113 can be used for the activation of the direction indicator by voice commands generated by the voice control unit 113 and output, e.g., by the audio system of the vehicle. Additionally, a probability calculating unit 107 is provided which calculated probabilities whether the present route used by a vehicle corresponds to one of previously used routes which the driver of the vehicle used in the past and which may be stored in the memory 104.

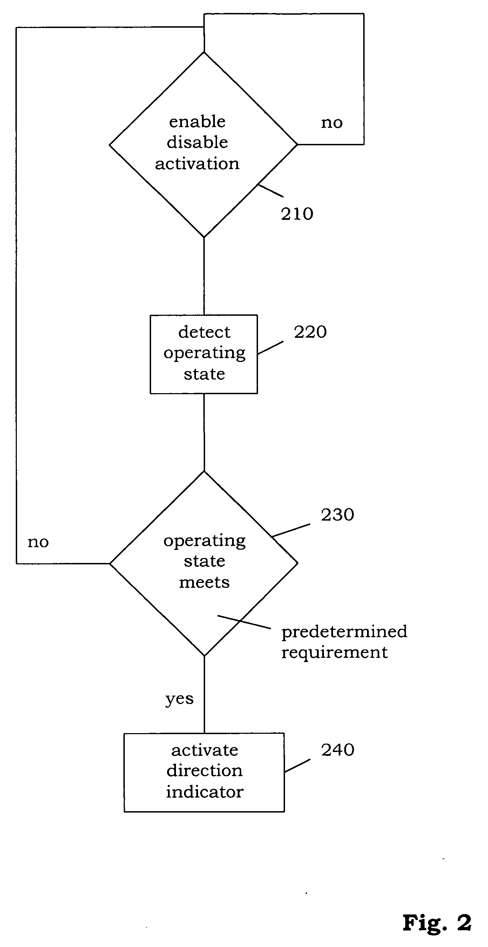

In Fig. 2 the basic steps for activating the direction indicator are shown. In a first step 210 it is decided whether the activation unit of the direction indicator should be enabled or disabled. The driver of the vehicle may wish to disable the activation unit in certain situations, e.g., when driving in a city, or may wish to enable the activation unit in other situations, e.g., while driving on a highway. In the next step 220 the operating state of the vehicle is detected, when the activation unit was enabled in step 210. In step 230 it is decided whether the operating stated detected in step 220 meets a predetermined requirement. If this is the case, the direction indicator is activated. If the operating state detected by the detection unit 101 does not meet the predetermined requirements, the system may start again at the beginning and verify whether the activation should be enabled or disabled. If the predetermined requirement is met, the direction indicator will be activated in step 240.

One important aspect of the invention is the fact that the system for controlling the direction indicator of the vehicle relies on signals which are normally already present in nowadays vehicles. There is no need for the provision of another device monitoring the situation around the vehicle, such as cameras or radars. It should be understood that these devices could be used in combination with the signals provided in the vehicle itself. However, according to one aspect of the invention, the activation of the direction indicator is based on signal parameters relating to an operating state of the vehicle. These signals of parameters relating to an operating state can be provided on a bus system provided in the vehicle having all the signals needed for activating the direction indicator.

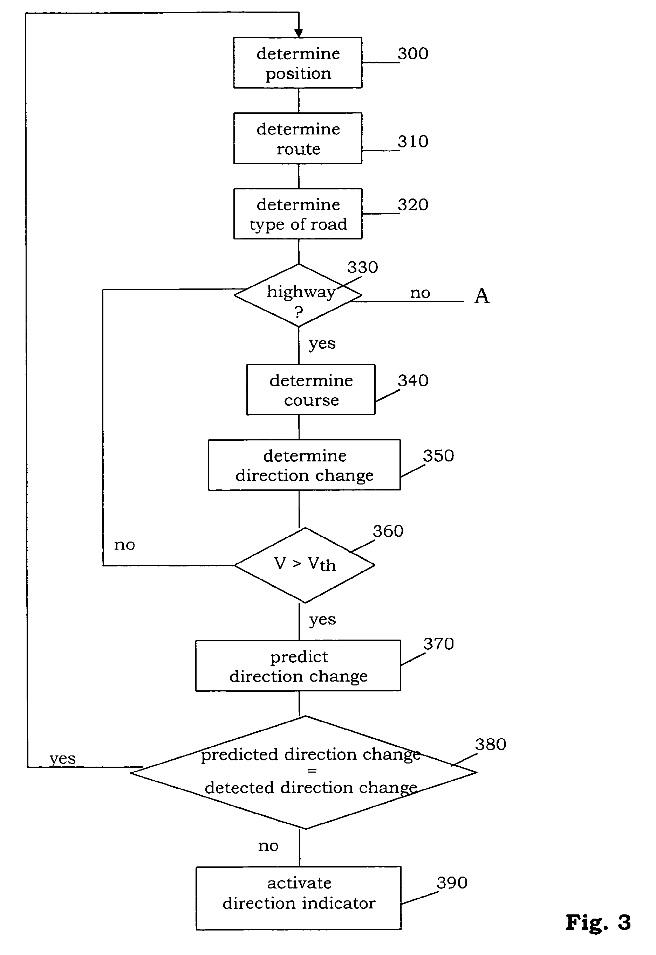

In Fig. 3 the different steps for activating the direction indicator are shown in more detail. In a first step 300 the position of the vehicle is determined by using the position detecting unit 121 of the navigation unit 120. In a second step 310 the route to a predetermined destination is determined. The destination may be input by the driver of the vehicle or may be received on any other communication device outside the vehicle. In the next step 320 a type of road on which the vehicle is moving is determined. This is possible by comparing the actual position to the road map data 123 in the navigation unit 120. In the next step 330 it is determined whether the vehicle is driving on a highway or not. In the present context the term highway means that there are several lanes for each driving direction. If the vehicle is on a highway, the course of the road in the direction of motion of the vehicle is determined in step 340. This is possible, since the route and the actual position are known, so that the course of the road coming up in front of the vehicle can be determined. In the next step 350 the changes in the direction of motion are detected. This is possibly by, e.g., reading the voltage signal emitted from the gyroscope 108. In a step 360 it is determined whether the vehicle speed V exceeds a certain threshold speed $V_{th}$. This verification of the vehicle speed can be performed, if the driver wants to prevent the activation of the direction indicator at low vehicle speeds in the case of a traffic jam, etc. Nevertheless, step 360 could also be omitted. In the next step 370 the direction change of the vehicle is predicted. This prediction is performed by using the determined course of the vehicle in step 340. Knowing the velocity of the vehicle and the course of the road, the signal emitted from the gyroscope can be predicted by using the road map data. In step 380 it is decided whether the predicted direction change in step 370 corresponds to the detected direction change in step 350. If these two signals of the parameter relating to the operating state differ by a certain amount, the direction indicator will be activated. In dependence on the sign of the result of the difference between these two signals the direction indicator will either be activated to the left or to the right.

For the activation of the direction indicator the prediction of the direction change by using the upcoming road is not absolutely necessary and can be omitted. In a first embodiment, only the direction change can be measured. In a different alternative the activation of the direction indicator could only occur when the vehicle is driving straight ahead.

In a further step (not shown) the difference between the predicted direction change and the detected direction change can also be compared to predetermined signal characteristics. These predetermined signal characteristics can comprise data showing the evaluation of the detected signal during different situations where the activation of the direction indicator seems to be helpful. On possible example could be the lane change on a highway. If the changes in the direction of motion are detected by using a gyroscope, these predetermined characteristics can comprise the evaluation of the voltage signal over time for the situation of a lane change on a multiple lane road. These signal characteristics will depend on the type of vehicle used and can be stored in a memory 104 of the system 100. These predetermined signal characteristics can be transmitted to the vehicle via the transmitting/receiving unit 106. They could originate from other vehicles or from a common server which could be accessible over the internet by way of example.

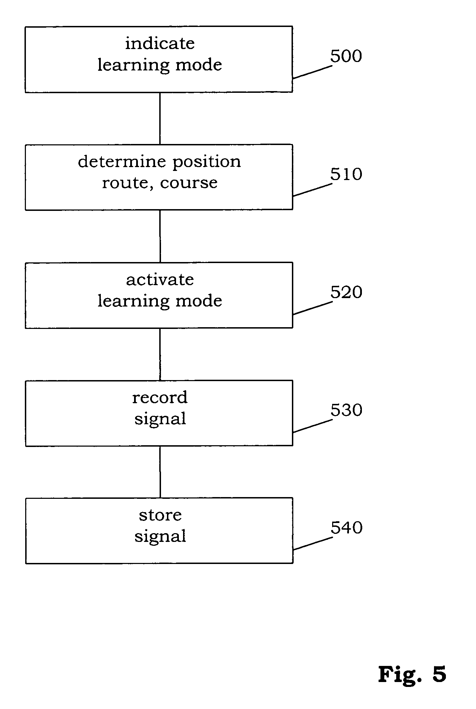

These predetermined signal characteristics can also be generated by the driver in a learning mode as shown in Fig. 5. In a first step 500 the driver indicates that a learning mode should be activated. In the next step the actual position and the route to a predetermined destination and the course of the upcoming road are determined in step 510, as it was described in combination with Fig. 3. In a step 520 the learning mode could be activated. This could be done by pressing a learning mode button (not shown) or by indicating it in any other way. In step 530 the signal relating to the operating state of the vehicle is recorded. For example, the driver can change from one lane to the other, as it is the case when overtaking another vehicle. The voltage changes due to the changes in the direction of motion can be detected and recorded and stored in the memory 104. If the vehicle is going straight ahead, the signal itself can be stored as detected, if the learning mode is activated. When the road itself is not going straight, the course of the road must be considered in order to derive the signal components due to the lane change. The signal, i.e. the voltage signal of the gyroscope, which is only due to the lane change, is stored in step 540.

There are many other possibilities of predetermined signal characteristics. For example, the signal could be detected showing when the vehicle is passing a gateway of the highway or it can be registered in any other situation where the activation of the direction indicator is necessary and can be stored as reference signal characteristics.

Before activating the direction indicator in step 390 probabilities comprising information whether the upcoming route corresponds to other routes the driver has taken before can be taken into account. This is possible when the system 100 further stores the routes to predetermined destinations the driver has used before. If the actual route of the vehicle corresponds to one of the routes used earlier, the change in the direction of motion can be predicted more easily. When the vehicle initiates a turn, the fact that a turn is coming up can be detected at a higher accuracy than in the case when these probabilities are not taken into consideration.

Before the direction indicator is activated in step 390 the fact that it will be activated could also be displayed to the driver of the vehicle. According to one embodiment of the invention the system could wait for a predetermined amount of time before activating the direction indicator, so that the driver would have time to react and could overrule the system for activating the direction indicator. Instead of directly activating the direction indicator the system could also 'tell' the driver that the direction indicator should be activated. The driver can then decide whether he/she will follow the proposed activation or not.

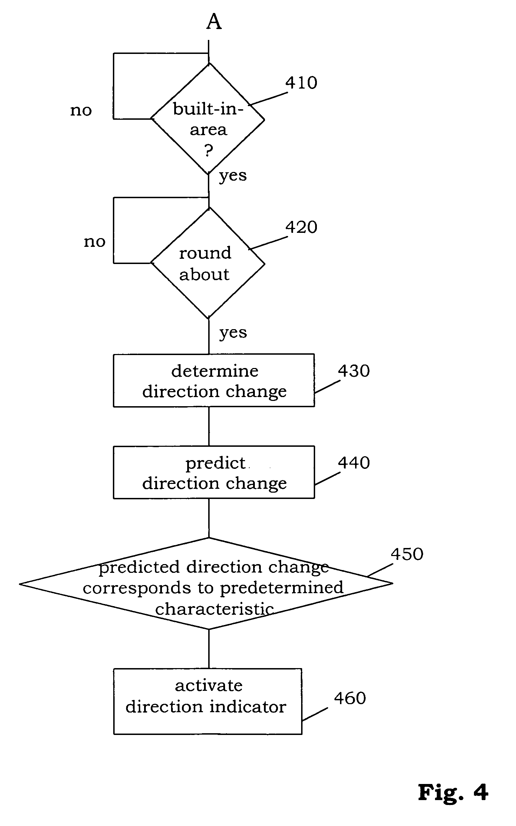

In Fig. 4 the situation is shown when it is detected in step 330 that the vehicle is currently not driving on a highway (point A in Fig. 3). As indicated in Fig. 4, in a first step 410 it is detected whether the vehicle is moving within a built-up area. One possible application of the system for controlling the activation of the direction indicator is the activation of the direction indicator in a roundabout. In these cases the vehicle follows the a circle. When the the driver of the vehicle wants to exit the roundabout, the vehicle will stop to follow the circular-shaped road and will abruptly change the direction of motion. The fact that the vehicle is driving in a roundabout can be deduced from the road map data 123 provided on the navigation unit 120 or can be detected by the gyroscope itself (step 420). In a step 430 the direction change is detected by mirroring the voltage change originating from the gyroscope. In step 440 the predicted direction change is calculated by comparing the actual position to the route to the predetermined destination. If the predicted direction change corresponds to the detected direction change, the direction indicator may be activated (step 450 and 460). It should be understood that the steps 440 and 450 could also be omitted. In this case, the direction indicator will be activated when an abrupt change in the direction of motion of the vehicle is detected, as it is the case when the vehicle exits a roundabout.

As a matter of course, the situation shown in Fig. 4 is not limited to applications within a built-up area. The activation of the direction indicator could happen in every case when a roundabout is detected.

Naturally, the present application is not limited to applications on highways or the application in roundabouts. The direction indicator could be activated automatically whenever the driver thinks it would be helpful to get assistance in the activation of the direction indicator.

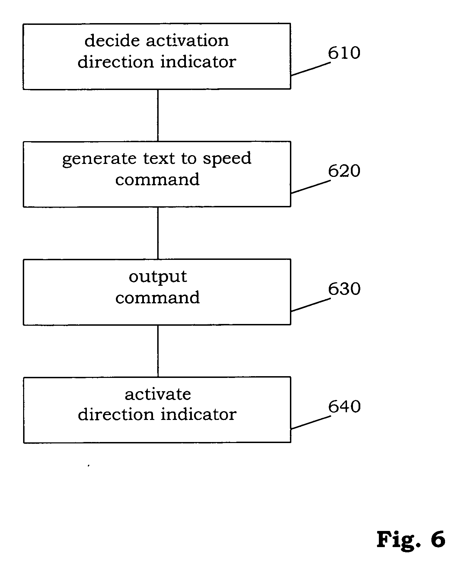

In Fig. 6 another way of activating the direction indicator is shown. This embodiment can help to activate the direction indicator when the navigation device is not originally installed in the vehicle by the manufacturer, but was bought by the owner of the vehicle later. In this case there may be no connection between the system for controlling the direction indicator and the direction indicator itself. However, vehicles often comprise voice control system. It is decided in step 610 that the direction indicator should be activated, a text-to-speech command (TTS command) is generated by the voice control unit 113 in step 620. This command can then be output by using the audio system (not shown) of the vehicle in step 630. If the direction indicator can be activated by using voice commands, the direction indicator will be activated in step 640 via the voice control unit of a vehicle.

In conclusion, the present invention provides a system for controlling the direction indicator in an easy way by mainly using signals of at least one parameter relating to the operating state of the vehicle, which are normally already present in the vehicle.

**Claims**

1. System for controlling the direction indicator of a vehicle, comprising:

   - means for detecting (101) at least one signal of at least one parameter relating to an operating state of the vehicle,
   - means (102) for activating the direction indicator depending on the detected signal of the parameter relating to the operating state of the vehicle.

2. System according to claim 1, further comprising a navigation system (120) for detecting the actual position of the vehicle, the navigation system comprising road map data (123).

3. System according to claim 2, further comprising means (125) for detecting the type of road on which the vehicle is moving by comparing the vehicle position to the road map data.

4. System according to any of the preceding claims, further comprising means (108) for detecting changes in the direction of motion of the vehicle.

5. System according to claim 4, wherein said means (108) for detecting changes in the direction of motion comprises a gyroscope.

6. System according to any of claims 2 to 5, further comprising means (122) for determining a route to a predetermined destination and for determining the course of the road (124) in the direction of motion of the vehicle by comparing the actual position of the vehicle to the determined route and to the road map data.

7. System according to any of the preceding claims, further comprising a camera taking pictures of the environment of the vehicle.

8. System according to any of the preceding claims, further comprising a speedometer (110) for detecting the actual speed of the vehicle.

9. System according to any of the preceding claims, further comprising a control unit (105) for enabling or disabling said means (102) for activating the direction indicator.

10. System according to claim 9, **characterized in that** said control unit (105) enables or disables said means (102) for activating the direction indicator depending on the type of road detected by said means for detecting the type of road of the vehicle and/or depending on the vehicle speed signal detected by the speedometer (110).

11. System according to any of the preceding claims, further comprising a memory (104) for storing signal characteristics of said at least one parameter relating to the operating state of the vehicle.

12. System according to any of the preceding claims further comprising a comparison unit (103) for comparing the detected signal of said at least one parameter relating to an operating state to said stored signal characteristics, the comparison unit detecting whether the detected signal is in accordance with the stored signal characteristics.

13. System according to any of the preceding claims, further comprising a transmitting/receiving unit (106) for transmitting and/or receiving signal characteristics of said at least one parameter relating to the operating state of the vehicle.

14. Method for controlling the direction indicator of a vehicle, comprising the following steps:

   - detecting at least one signal of at least one parameter relating to an operating state of the vehicle,
   - activating the direction indicator depending on the detected signal of the parameter relating to the operating state of the vehicle.

15. Method according to claim 14, further comprising the step of

   - determining a route to a predetermined destination, and /or
   - determining the actual position of the vehicle and/ or
   - determining the course of the road in the direction of motion by comparing the determined position of the vehicle to the determined route and to road map data containing the route.

16. Method according to claim 15, further comprising the step of determining the type of road on which the vehicle is moving by comparing the actual vehicle position to road map data indicating the different types of roads.

17. Method according to any of claims 14 to 16, further comprising the step of detecting changes of the direction of motion.

18. Method according to claim 17, wherein changes of direction of the vehicle are detected by detecting the voltage signal $v_{det}(t)$ of a gyroscope comprised in the vehicle, wherein the detected voltage $v_{det}(t)$ signal is correlated with a predicted voltage signal $v_{pre}(t)$ which is predicted using the determined course of the vehicle, the direction indicator being activated when the following equation is satisfied:

$$(v_{det}(t)- v_{pre}(t)) > v_{th},$$

$v_{th}$ being a predetermined threshold value.

19. Method according to any of claims 14 to 18, further comprising the steps of enabling or disabling the activation of the direction indicator.

20. Method according to claim 19, further comprising the steps of

- detecting the actual vehicle speed,
- detecting the type of road the vehicle is currently using,
- determining the course of the road in the direction of motion,
- enabling or disabling the activation of the direction indicator in dependence on the vehicle speed, the type of road and/or the course of the road.

21. Method according to any of claims 14 to 20, further comprising the steps of

- comparing the detected signal of said at least one parameter relating to an operating state to predetermined signal characteristics,
- detecting whether the detected signal is in correspondence with any of the predetermined signal characteristics, and
- activating the direction indicator when the detected signal is in correspondence with any of the predetermined signal characteristics.

22. Method according to any of claims 14 to 21, further comprising the step of activating a learning mode in which, during driving, at least one parameter relating to an operating state of the vehicle is recorded and taken as the predetermined signal characteristic.

23. Method according to any of claims 14 to 22, further comprising the step of activating the direction indicator via a voice command generated and output from a speech control system of the vehicle.

24. Method according to any of claims 14 to 23, further comprising the step of detecting the lane in which the vehicle is moving by comparing the actual position of the vehicle to the road map data.

25. Method according to any of claims 14 to 24 further comprising the step of

- storing the routes to predetermined destinations,
- comparing the actual route to the stored routes,
- calculating probabilities that the present route corresponds to one of the stored routes,
- activate direction indicator by taking into consideration the calculated probabilities.

26. Method according to any of claims 14 to 25, further comprising the step of

- indicating to the driver that the direction indicator will be activated, the driver having the possibility to overrule the activation by indicating that the direction indicator should not be activated.

Fig. 1

enable
disable
activation

210

no

detect
operating
state

220

operating
state
meets

230

predetermined
requirement

no

yes

activate
direction
indicator

240

**Fig. 2**

**Fig. 3**

A

```
          ┌─────┐
          │     │  ┌──────────┐
no ───────│     │  │ 410
          ◇ built-in- ◇
            area
            ?
              │ yes
          ┌─────┐
          │     │  ┌──────────┐
no ───────│     │  │ 420
          ◇ round ◇
            about
              │ yes
```

| | |
|---|---|
| determine direction change | 430 |

| | |
|---|---|
| predict direction change | 440 |

predicted direction change corresponds to predetermined characteristic — 450

| | |
|---|---|
| activate direction indicator | 460 |

**Fig. 4**

| | |
|---|---|
| indicate learning mode | 500 |
| determine position route, course | 510 |
| activate learning mode | 520 |
| record signal | 530 |
| store signal | 540 |

**Fig. 5**

```
┌─────────────────────────┐
│   decide activation     │
│   direction indicator   │──── 610
└─────────────────────────┘
             │
┌─────────────────────────┐
│  generate text to speed │
│        command          │──── 620
└─────────────────────────┘
             │
┌─────────────────────────┐
│        output           │
│       command           │──── 630
└─────────────────────────┘
             │
┌─────────────────────────┐
│       activate          │
│  direction indicator    │──── 640
└─────────────────────────┘
```

**Fig. 6**

EP 1 580 529 A1

**European Patent Office**

**EUROPEAN SEARCH REPORT**

Application Number

EP 04 00 6878

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 199 62 945 A (DAIMLER CHRYSLER AG) 26 April 2001 (2001-04-26) | 1,4,5, 8-12,14, 17-19, 21,23 | G01C21/34 B60Q1/34 |
| Y | * column 1 - column 4 * | 2,3,6,7, 15,16, 20,24 | |
| | ----- | | |
| Y | EP 1 060 950 A (DAIMLER CHRYSLER AG) 20 December 2000 (2000-12-20)<br><br>* paragraphs [0001], [0002], [0007], [0009] - [0013], [0020], [0021], [0027], [0038], [0043], [0045] - [0047], [0049], [0050], [0054], [0055], [0061], [0084] *<br>* paragraphs [0107] - [0116] * | 2,3,6,7, 15,16, 20,24 | |
| | ----- | | |
| X | EP 0 881 613 A (BAYERISCHE MOTOREN WERKE AG) 2 December 1998 (1998-12-02)<br><br>* column 1, line 1 - column 5, line 6 *<br>* figures 1-3 * | 1-4,6,8, 9,14,15, 17,24,26 | TECHNICAL FIELDS SEARCHED (Int.Cl.7)<br><br>B60Q<br>G01C |
| | ----- | | |
| X | US 2003/004643 A1 (SEREZAT LAURENT) 2 January 2003 (2003-01-02)<br><br>* paragraphs [0002], [0006], [0008] - [0011], [0013], [0015], [0016], [0018], [0023] - [0043] *<br>* figures 1-3 * | 1,2,4, 8-10, 12-14, 17,21 | |
| | -----<br>-/-- | | |

The present search report has been drawn up for all claims

| Place of search | Date of completion of the search | Examiner |
|---|---|---|
| Munich | 17 August 2004 | Goltes, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**European Patent Office**

**EUROPEAN SEARCH REPORT**

Application Number

EP 04 00 6878

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 694 895 A (SUMITOMO ELECTRIC INDUSTRIES) 31 January 1996 (1996-01-31)<br><br>* column 1, line 16 - column 2, line 30 *<br>* column 4 *<br>* column 5, line 48 - column 6, line 46 *<br>* column 11, line 17 - column 13, line 4 *<br>* figures 1,10-13 *<br>----- | 1,8,9,<br>11-14,<br>21,25 | |
| X | PATENT ABSTRACTS OF JAPAN<br>vol. 2003, no. 12,<br>5 December 2003 (2003-12-05)<br>& JP 2004 045291 A (DENSO CORP),<br>12 February 2004 (2004-02-12)<br>* abstract *<br>----- | 1-3,9,<br>11,12,<br>14-16,21 | |
| X | PATENT ABSTRACTS OF JAPAN<br>vol. 2000, no. 03,<br>30 March 2000 (2000-03-30)<br>& JP 11 342808 A (TOYOTA MOTOR CORP),<br>14 December 1999 (1999-12-14)<br>* abstract *<br>* figures 1,2 *<br>----- | 1,2,4,5,<br>9,14,17,<br>23 | TECHNICAL FIELDS SEARCHED (Int.Cl.7) |
| X | PATENT ABSTRACTS OF JAPAN<br>vol. 014, no. 545 (M-1054),<br>4 December 1990 (1990-12-04)<br>& JP 02 231241 A (MATSUSHITA ELECTRIC IND<br>CO LTD), 13 September 1990 (1990-09-13)<br>* abstract *<br>----- | 1,4,7,9,<br>14,15,17 | |

-/--

The present search report has been drawn up for all claims

| Place of search | Date of completion of the search | Examiner |
|---|---|---|
| Munich | 17 August 2004 | Goltes, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 356 189 B1 (FUJIMAKI TOMO) 12 March 2002 (2002-03-12)<br><br>* column 1, line 1 - line 2 *<br>* column 2, line 40 - column 4, line 54 *<br>* column 8, line 17 - column 10, line 64 *<br>* column 12, line 9 - column 13, line 45 *<br>* column 14, line 54 - column 15, line 5 *<br>* figure 2 *<br>----- | 1-6,8,9, 13,14, 17,22,24 | |
| X | PATENT ABSTRACTS OF JAPAN vol. 2000, no. 19, 5 June 2001 (2001-06-05) & JP 2001 039213 A (TOKAI RIKA CO LTD), 13 February 2001 (2001-02-13) * abstract *<br>----- | 1,2,4, 8-10,14, 15,17 | |

TECHNICAL FIELDS SEARCHED (Int.Cl.7)

The present search report has been drawn up for all claims

| Place of search | Date of completion of the search | Examiner |
|---|---|---|
| Munich | 17 August 2004 | Goltes, M |

EPO FORM 1503 03.82 (P04C01)

**ANNEX TO THE EUROPEAN SEARCH REPORT
ON EUROPEAN PATENT APPLICATION NO.**

EP 04 00 6878

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2004

| Patent document cited in search report | | Publication date | Patent family member(s) | | Publication date |
|---|---|---|---|---|---|
| DE 19962945 | A | 26-04-2001 | DE | 19962945 A1 | 26-04-2001 |
| EP 1060950 | A | 20-12-2000 | DE | 19927183 A1 | 21-12-2000 |
| | | | EP | 1060950 A2 | 20-12-2000 |
| | | | JP | 2001018707 A | 23-01-2001 |
| EP 0881613 | A | 02-12-1998 | DE | 19722186 A1 | 03-12-1998 |
| | | | EP | 0881613 A2 | 02-12-1998 |
| US 2003004643 | A1 | 02-01-2003 | FR | 2815311 A1 | 19-04-2002 |
| | | | EP | 1237750 A1 | 11-09-2002 |
| | | | WO | 0232719 A1 | 25-04-2002 |
| | | | JP | 2004511389 T | 15-04-2004 |
| EP 0694895 | A | 31-01-1996 | JP | 8086662 A | 02-04-1996 |
| | | | EP | 0694895 A2 | 31-01-1996 |
| | | | KR | 179076 B1 | 15-05-1999 |
| | | | US | 5839086 A | 17-11-1998 |
| JP 2004045291 | A | 12-02-2004 | NONE | | |
| JP 11342808 | A | 14-12-1999 | NONE | | |
| JP 02231241 | A | 13-09-1990 | JP | 1928519 C | 12-05-1995 |
| | | | JP | 6053473 B | 20-07-1994 |
| US 6356189 | B1 | 12-03-2002 | JP | 2000293791 A | 20-10-2000 |
| | | | JP | 2000293799 A | 20-10-2000 |
| | | | DE | 10017139 A1 | 30-11-2000 |
| | | | FR | 2791932 A1 | 13-10-2000 |
| JP 2001039213 | A | 13-02-2001 | NONE | | |

EPO FORM P0459

For more details about this annex : see Official Journal of the European Patent Office, No. 12/82